Europäisches Patentamt

European Patent Office

Office européen des brevets

(19)

(11) **EP 1 131 876 B1**

(12) **EUROPÄISCHE PATENTSCHRIFT**

| | |
|---|---|
| (45) Veröffentlichungstag und Bekanntmachung des Hinweises auf die Patenterteilung:<br>**18.09.2002 Patentblatt 2002/38** | (51) Int Cl.⁷: **H02H 7/26** |
| (21) Anmeldenummer: **99962067.7** | (86) Internationale Anmeldenummer:<br>**PCT/DE99/03745** |
| (22) Anmeldetag: **19.11.1999** | (87) Internationale Veröffentlichungsnummer:<br>**WO 00/031849 (02.06.2000 Gazette 2000/22)** |

(54) **VERFAHREN ZUM ERZEUGEN EINES EINEN KURZSCHLUSS KENNZEICHNENDEN FEHLERSIGNALS**

METHOD FOR GENERATING AN ERROR SIGNAL IDENTIFYING A SHORT CIRCUIT

PROCEDE PERMETTANT DE PRODUIRE UN SIGNAL D'ERREUR SIGNALANT UN COURT-CIRCUIT

| | |
|---|---|
| (84) Benannte Vertragsstaaten:<br>**DE FR GB IT** | (73) Patentinhaber: **SIEMENS AKTIENGESELLSCHAFT**<br>**80333 München (DE)** |
| (30) Priorität: **20.11.1998 DE 19855006** | (72) Erfinder: **KAISER, Steffen**<br>**D-10407 Berlin (DE)** |
| (43) Veröffentlichungstag der Anmeldung:<br>**12.09.2001 Patentblatt 2001/37** | (56) Entgegenhaltungen:<br>**EP-A- 0 406 809     WO-A-93/13582**<br>**GB-A- 2 288 930** |

EP 1 131 876 B1

**Beschreibung**

Es ist bekannt, dreiphasige Energieübertragungsleitungen mit Hilfe von Distanzschutzgeräten auf das Auftreten von einoder mehrpoligen Kurz- oder Erdschlüssen hin zu überwachen (vgl. Handbuch zum Siemens Distanzschutzgerät "Digitaler Abzweigschutz für Höchstspannungsleitungen" 7SA513 V3.2 der Siemens AG aus dem Jahre 1995, S. 329).

Außerdem ist es bekannt, eine sog. Doppelleitung, die durch zwei dreiphasige Energieübertragungsleitungen gebildet ist, zu überwachen; dazu sind zwei Distanzschutzgeräte, die jeweils an eine der beiden dreiphasigen Energieübertragungsleitungen der Doppelleitung angeschlossen sind, örtlich an der gleichen Stelle an der Doppelleitung angebracht. Um Fehler bei der meßtechnischen Erfassung von Kurzschlüssen mit Erdberührung bei einer der beiden Energieübertragungsleitungen zu vermeiden, wird der Nullstrom der nicht von einem Fehler betroffenen anderen Energieübertragungsleitung zusätzlich berücksichtigt, indem nämlich eine dem Nullstrom dieser anderen Energieübertragungsleitung entsprechende und vom Distanzschutzgerät dieser anderen Energieübertragungsleitung erfaßte Meßgröße zu dem für die vom Kurzschluß betroffene Energieübertragungsleitung zuständigen Distanzschutzgerät übermittelt und von diesem ausgewertet wird ("Schutztechnik in Elektroenergiesystemen" VDE-Verlag GmbH, Dr.-Ing. Heinz Clemens, Prof. Dr. Klaus Rothe, S. 94 - 99).

Ferner ist aus der internationalen Patentanmeldung WO 93/13582 ein Verfahren zum Erzeugen eines zwischen einem ersten Phasenleiter und einem zweiten Phasenleiter einer Energieübertragungsanordnung aufgetretenen Kurzschluß kennzeichnenden Fehlersignals bekannt, wobei der erste Phasenleiter ein Phasenleiter einer ersten dreiphasigen Energieübertragungsleitung und der zweite Phasenleiter ein Phasenleiter einer zweiten dreiphasigen, räumlich entlang der ersten Energieübertragungsleitung angebrachten Energieübertragungsleitung ist, bei dem eine dem durch den ersten Phasenleiter fließenden Strom proportionale Strommeßgröße abgetastet und unter Bildung von Stromabtastwerten digital gewandelt und eine der an dem ersten Phasenleiter anliegenden Leiter-Erde-Spannung proportionale Spannungsmeßgröße abgetastet und unter Bildung von Spannungs-abtastwerten digital gewandelt wird.

Bei diesem bekannten Verfahren werden Strom und Spannung des zweiten Phasenleiters der benachbarten zweiphasigen Energieübertragungsleitung über Modellannahmen aus den von der ersten Phasenleitung der ersten dreiphasigen Energieübertragungsleitung abgeleiteten Meßgrößen ermittelt. Eine Schleifenimpedanz wird somit aus gemessenen und errechneten Stromund Spannungswerten ermittelt.

Der Erfindung liegt die Aufgabe zugrunde, ein einfaches und zuverlässiges Verfahren zum Erzeugen eines zwischen einem ersten Phasenleiter und einem zweiten Phasenleiter zweier verschiedener parallel verlaufender, dreiphasiger Energieübertragungsleitungen aufgetretenen Kurzschluß kennzeichnenden Fehlersignals anzugeben.

Diese Aufgabe wird erfindungsgemäß dadurch gelöst, daß bei einem Verfahren der oben angegebenen Art eine dem durch den zweiten Phasenleiter fließenden Strom proportionale Strommeßgröße abgetastet und unter Bildung von Strömabtastwerten digital gewandelt wird, eine der an dem zweiten Phasenleiter anliegenden Leiter-Erde-Spannung proportionale Spannungsmeßgröße abgetastet und unter Bildung von Spannungs-abtastwerten digital gewandelt wird, für die durch die beiden Phasenleiter gebïldete Leiter-Leiter-Schleife mit den Strom- und Spannungsabtastwerten oder mit aus diesen abgeleiteten Hilfsmeßgrößen der beiden Phasenleiter ein komplexer Schleifenimpedanzmeßwert gebildet wird und das Fehlersignal gebildet wird, wenn der Schleifenimpedanzmeßwert innerhalb eines vorgegebenen Auslösegebiets liegt.

Der wesentliche Vorteil des erfindungsgemäßen Verfahrens ist darin zu sehen, daß es sehr einfach durchzuführen ist, weil aus den Strom- und Spannungsabtastwerten beider Phasenleiter lediglich ein komplexer Schleifenimpedanzwert gebildet werden muß und anschließend nur geprüft werden muß, ob der Schleifenimpedanzwert innerhalb eines vorgegebenen Auslösegebiets bzw. Auslösepolygons liegt.

Besonders kostengünstig läßt sich das erfindungsgemäße Verfahren durchführen, wenn auf kommerziell erhältliche Standard-Meßgeräte für dreiphasige Energieübertragungsleitungen zurückgegriffen werden kann; dies läßt sich konkret dadurch erreichen, daß die Strom- und Spannungsabtastwerte des ersten Phasenleiters mit einem an die erste Energieübertragungsleitung an einer ersten Stelle angeschlossenen Meßgerät erfaßt werden, die Strom- und Spannungsabtastwerte oder die aus diesen abgeleiteten Hilfsmeßgrößen des ersten Phasenleiters über eine Datenverbindung zu einem zweiten an die zweite Energieübertragungsleitung an einer in der Nähe der ersten Stelle befindlichen zweiten Stelle angeschlossenen Meßgerät übertragen werden, mit dem die Strom- und Spannungsabtastwerte des zweiten Phasenleiters der zweiten Energieübertragungsleitung erfaßt werden, und in dem zweiten Meßgerät mit den Strom- und Spannungsabtastwerten oder mit den aus diesen abgeleiteten Hilfsmeßgrößen der beiden Phasenleiter die Schleifenimpedanz ermittelt und das Fehlersignal erzeugt wird; konkret können also die im wesentlichen üblichen Meßgeräte für dreiphasige Energieübertragungsleitungen eingesetzt werden, falls diese Meßgeräte zum Austausch von Meßdaten über eine Datenverbindung und zum Verarbeiten von über die Datenverbindung übertragenen Meßdaten anderer Meßgeräte geeignet sind.

Besonders schnell läßt sich das erfindungsgemäße Verfahren durchführen, wenn als Hilfsmeßgröße bereits im Hinblick auf die Ermittlung der Schleifenimpedanz besonders geeignet aufbereitete Meßgrößen erzeugt und übertragen werden; dies wird beispielsweise dadurch erreicht, daß aus den Strom- und Spannungsabtastwerten als Hilfsmeßgrößen komplexe Strom- und Spannungszeigermeßgrößen gebildet werden.

Das erfindungsgemäße Verfahren läßt sich beispielsweise mit Distanzschutzmeßgeräten als Meßgeräten durchführen.

Die Erfindung bezieht sich außerdem auf eine Anordnung, mit der ein zwischen einem ersten Phasenleiter und einem zweiten Phasenleiter zweier verschiedener parallel verlaufender, dreiphasiger Energieübertragungsleitungen aufgetretener Kurzschluß besonders einfach und zuverlässig erkannt werden kann.

Diese Aufgabe wird erfindungsgemäß gelöst durch eine Anordnung zum Erzeugen eines zwischen einem ersten Phasenleiter und einem zweiten Phasenleiter einer Energieübertragungsanordnung aufgetretenen Kurzschluß kennzeichnenden Fehlersignals, wobei der erste Phasenleiter ein Phasenleiter einer ersten dreiphasigen Energieübertragungsleitung und der zweite Phasenleiter ein Phasenleiter einer zweiten dreiphasigen , räumlich entlang der ersten Energieübertragungsleitung angebrachten Energieübertragungsleitung ist, mit einem ersten an die erste Energieübertragungsleitung an einer ersten Stelle angeschlossenen Meßgerät, das eine dem durch den ersten Phasenleiter fließenden Strom proportionale Strommeßgröße abtastet und unter Bildung von Stromabtastwerten digital wandelt und das eine der an dem ersten Phasenleiter anliegenden Leiter-Erde-Spannung proportionale Spannungsmeßgröße abtastet und unter Bildung von Spannungsabtastwerten digital wandelt, und mit einer das erste Meßgerät mit einem zweiten an die zweite Energieübertragungsleitung an einer in der Nähe der ersten Stelle befindlichen zweiten Stelle angeschlossenen Meßgerät verbindenden Datenverbindung, über die die Strom- und Spannungsabtastwerte oder aus diesen abgeleitete Hilfsmeßgrößen des ersten Meßgerätes zu dem zweiten Meßgerät übertragen werden, wobei das zweite Meßgerät derart ausgebildet ist, daß es eine dem durch den zweiten Phasenleiter fließenden Strom proportionale Strommeßgröße abtastet und unter Bildung von Stromabtastwerten digital wandelt, eine der an dem zweiten Phasenleiter anliegende Leiter-Erde-Spannung proportionale Spannungsmeßgröße abtastet und unter Bildung von Spannungsabtastwerten digital wandelt und für die durch die beiden Phasenleiter gebildete Leiter-Schleife mit den Strom- und Spannungsabtastwerten oder mit aus diesen abgeleiteten Hilfsmeßgrößen des ersten Meßgerätes sowie mit den eigenen Strom- und Spannungsabtastwerten oder mit aus diesen abgeleiteten Hilfsmeßgrößen einen komplexen Schleifenimpedanzmeßwert bildet und das Fehlersignal erzeugt, wenn der Schleifenimpedanzmeßwert innerhalb eines vorgegebenen Auslösegebietes liegt.

Die im Zusammenhang mit dem erfindungsgemäßen Verfahren erläuterten Vorteile gelten für die erfindungsgemäße Anordnung entsprechend.

Zur Erläuterung der Erfindung zeigt eine Figur ein Ausführungsbeispiel für eine erfindungsgemäße Anordnung zum Erzeugen eines zwischen einem ersten Phasenleiter einer ersten dreiphasigen Energieübertragungsleitung und einem zweiten Phasenleiter einer zweiten dreiphasigen Energieübertragungsleitung aufgetretenen Kurzschluß kennzeichnenden Fehlersignals; die Anordnung ist auch zum Durchführen des erfindungsgemäßen Verfahrens geeignet.

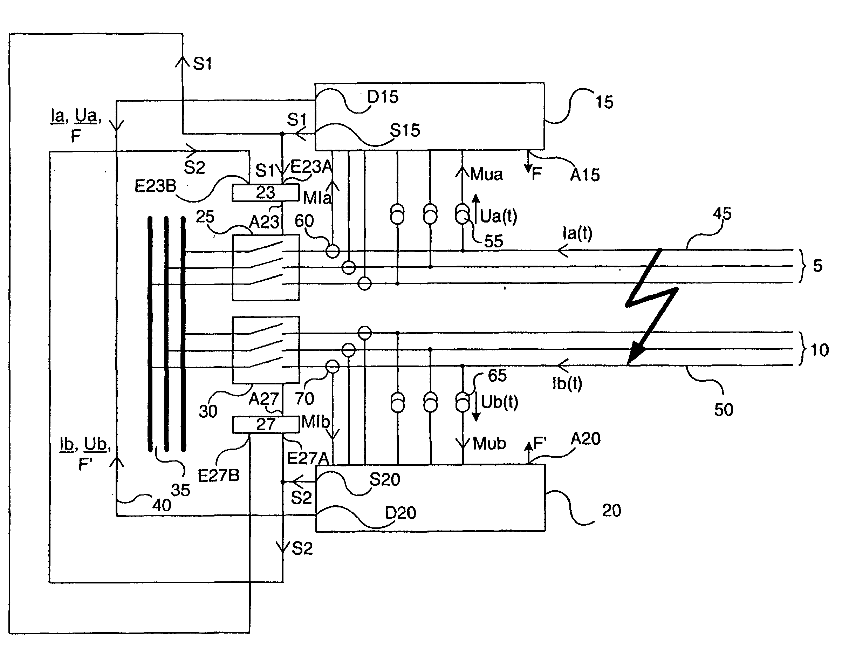

Die Figur zeigt eine erste dreiphasige Energieübertragungsleitung 5 und eine zweite dreiphasige Energieübertragungsleitung 10, an die über Strom- und Spannungswandler jeweils ein Distanzschutzgerät angeschlossen ist. Dabei ist die erste Energieübertragungsleitung 5 mit einem ersten Distanzschutzgerät 15 und die zweite Energieübertragungsleitung 10 mit einem zweiten Distanzschutzgerät 20 verbunden.

Das erste Distanzschutzgerät 15 ist über einen Steuerausgang S15 mit einem Eingang E23A einer ersten Auslöseeinrichtung 23 verbunden, der an einem weiteren Eingang E23B ein Steuerausgang S20 des zweiten Distanzschutzgerätes 20 vorgeschaltet ist und der an ihrem Ausgang A23 ein Leistungsschalter 25 nachgeordnet ist. Der Leistungsschalter 25 schaltet bei entsprechender Ansteuerung durch die Auslöseeinrichtung 23 bzw. bei entsprechender Ansteuerung durch das erste Distanzschutzgerät 15 und das zweite Distanzschutzgerät 20 die von einem Fehler betroffenen Phasenleiter der ersten Energieübertragungsleitung 5 ab.

Das zweite Distanzschutzgerät 20 ist darüber hinaus in entsprechender Weise über seinen Steuerausgang S20 mit einem Eingang E27A einer zweiten Auslöseeinrichtung 27 verbunden, der an einem weiteren Eingang E27B der Steuerausgang S15 des ersten Distanzschutzgerätes 15 vorgeschaltet ist und der an ihrem Ausgang A27 ein zweiter Leistungsschalter 30 nachgeordnet ist. Der zweite Leistungsschalter 30 schaltet bei entsprechender Ansteuerung durch die zweite Auslöseeinrichtung 27 bzw. bei entsprechender Ansteuerung durch das erste Distanzschutzgerät 15 und das zweite Distanzschutzgerät 20 die von einem Fehler betroffenen Phasenleiter der zweiten Energieübertragungsleitung 10 ab.

In der Figur ist außerdem eine Sammelschiene 35 dargestellt, die die Phasenleiter der beiden Energieübertragungsleitungen 5 und 10 paarweise miteinander verbindet. Die beiden Distanzschutzgeräte 15 und 20 sind über Datenanschlüsse D15 bzw. D20 mittels einer Datenleitung 40 als Datenverbindung miteinander verbunden.

Mit der Anordnung gemäß der Figur läßt sich ein Fehlersignal F bzw. F' erzeugen, wenn zwischen einem Phasenleiter der ersten Energieübertragungsleitung 5 und einem Phasenleiter der zweiten Energieübertragungsleitung 10 ein Kurzschluß aufgetreten ist. Dies soll anhand eines Beispieles erläutert werden, bei dem zwischen einem ersten Phasenleiter 45 der ersten Energieübertragungsleitung 5 und einem zweiten Phasenleiter 50 der zweiten Energieübertragungsleitung 10 ein Kurzschluß aufgetreten ist; selbstverständlich können mit der Anordnung gemäß der Figur alle mögliche Phasenleiterpaare der beiden Energieübertragungsleitungen 5 und 10 auf das Auftreten eines Kurzschlusses hin in gleicher Weise überwacht werden, wie es nachfolgend beispielhaft ausschließlich für die beiden Phasenleiter 45 und 50 erläutert wird.

Mit einem ersten Spannungswandler 55 wird die an dem ersten Phasenleiter 45 anliegende Leiter-Erde-Spannung Ua(t) in eine dieser Leiter-Erde-Spannung proportionale Spannungsmeßgröße MUa umgewandelt und zu dem ersten Distanzschutzgerät 15 übermittelt. Gleichzeitig wird mit einem ersten Stromwandler 60 der in dem ersten Phasenleiter 45 fließende Strom Ia(t) in eine diesem Strom proportionale Strommeßgröße MIa gewandelt, und es wird diese zu dem ersten Distanzschutzgerät 15 übermittelt. Die entsprechenden Meßwerte werden auch für den zweiten Phasenleiter 50 in entsprechender Weise ermittelt und zu dem zweiten Distanzschutzgerät 20 übertragen. Dabei wird konkret die an dem zweiten Phasenleiter 50 anliegende Leiter-Erde-Spannung Ub(t) mit einem Spannungswandler 65 in eine dieser Spannung proportionale Spannungsmeßgröße MUb gewandelt und diese Spannungsgröße MUb zu dem zweiten Distanzschutzgerät 20 übertragen. Der durch den zweiten Phasenleiter 50 fließende Strom Ib(t) wird mit einem zweiten Stromwandler 70 in einer diesem Phasenstrom Ib(t) proportionale Strommeßgröße MIb gewandelt, und es wird diese Strommeßgröße MIb zu dem zweiten Distanzschutzgerät 20 übertragen. Die jeweiligen Strom- und Spannungsmeßgrößen MUa, MIa, MUb und MIb in den beiden Distanzschutzgeräten 15 und 20 werden jeweils abgetastet und unter Bildung von Strom- und Spannungsabtastwerten digital gewandelt. In jedem der beiden Distanzschutzgeräte 15 und 20 werden aus den jeweiligen Strom- und Spannungsabtastwerten komplexe Stromzeiger- und Spannungszeiger-Meßgrößen ermittelt und es werden diese über die Datenleitung 40 zu dem jeweils anderen Distanzschutzgerät übermittelt; konkret wird von dem ersten Distanzschutzgerät 15 über die Datenleitung 40 eine aus der Spannungsmeßgröße MUa gebildete komplexe Spannungszeigermeßgröße $\underline{Ua}$ und eine aus der Strommeßgröße MIa gebildete komplexe Stromzeigermeßgröße $\underline{Ia}$ zu dem zweiten Distanzschutzgerät 20 übertragen. Dabei gibt also die komplexe Spannungszeigermeßgröße $\underline{Ua}$ die an dem Phasenleiter 45 anliegende Leiter-Erde-Spannung Ua (t) und die komplexe Stromzeigermeßgröße $\underline{Ia}$ die durch den ersten Phasenleiter 45 fließenden Phasenstrom Ia (t) an. Von dem zweiten Distanzschutzgerät 20 wird in gleicher Weise eine komplexe Stromzeigermeßgröße $\underline{Ib}$ und eine komplexe Spannungszeigermeßgröße $\underline{Ub}$

zum ersten Distanzschutzgerät 15 übertragen; dabei gibt die komplexe Spannungszeigermeßgröße $\underline{Ub}$ die an dem zweiten Phasenleiter 50 anliegende Leiter-Erde-Spannung Ub(t) und die Stromzeigermeßgröße $\underline{Ib}$ den durch den zweiten Phasenleiter 50 fließenden Phasenstrom Ib(t) an.

In dem zweiten Distanzschutzgerät 20 wird aus den nun dort vorliegenden Strom- und Spannungszeigermeßgrößen $\underline{Ia}$, $\underline{Ib}$, $\underline{Ua}$ und $\underline{Ub}$ ein Schleifenimpedanzmeßwert $\underline{Z2}$ gebildet:

$$\underline{Z2} = \frac{\underline{Ub} - \underline{Ua}}{\underline{Ib} - \underline{Ia}}$$

Der resultierende Schleifenimpedanzmeßwert $\underline{Z2}$ wird hinsichtlich seiner Lage in der komplexen Impedanz-Ebene ausgewertet; konkret wird das Fehlersignal F' erzeugt, wenn der Schleifenimpedanzmeßwert $\underline{Z2}$ innerhalb eines vorgegebenen Auslösegebiets bzw. Auslösepolygons in der Impedanz-Ebene liegt. Wie ein solches Auslösepolygon aussehen kann, läßt sich dem obengenannten Handbuch zum Schutzgerät 7SA 513 auf den Seiten 49 und 65 ebenfalls entnehmen.

In gleicher Weise wird von dem ersten Distanzschutzgerät 15 ein Impedanzmeßwert $\underline{Z1}$ gebildet:

$$\underline{Z1} = \frac{\underline{Ua} - \underline{Ub}}{\underline{Ia} - \underline{Ib}}$$

Falls dieser Schleifenimpedanzmeßwert $\underline{Z1}$ innerhalb des vorgegebenen Auslösepolygons liegt, wird von dem ersten Distanzschutzgerät 15 in entsprechender Weise ebenfalls das Fehlersignal F erzeugt, also ein Fehlersignal das einen zwischen dem ersten Phasenleiter 45 und dem zweiten Phasenleiter 50 aufgetretenen Kurzschluß kennzeichnet.

Falls von dem ersten Distanzschutzgerät 15 das Fehlersignal F generiert wird, so wird gleichzeitig am Steuerausgang S15 auch ein Steuersignal S1 erzeugt und an die beiden Auslöseeinrichtungen 23 und 27 weitergeleitet; das Steuersignal S1 gibt an, welche Phasenleiter von einem Kurzschluß betroffen sind - hier die Phasenleiter 45 und 50 - und somit abgeschaltet. werden müssen. Bei Vorliegen eines solchen Steuersignals S1 steuern die Auslöseeinrichtungen 23 und 27 die Leistungsschalter 25 und 30 derart an, daß diese die vom Fehler betroffenen Phasenleiter der beiden Energieübertragungsleitungen 5 und 10 abschalten.

In gleicher Weise arbeitet das zweite Distanzschutzgerät 20: Falls von dem zweiten Distanzschutzgeräte 20 das Fehlersignal F' generiert wird, so wird gleichzeitig auch ein Steuersignal S2 erzeugt und an die beiden Auslöseeinrichtungen 23 und 27 weitergeleitet; das Steuersignal S2 gibt an, welche Phasenleiter von einem Kurzschluß betroffen sind und somit abgeschaltet werden müssen. Bei Vorliegen dieses Steuersignals S2 steuern die Auslöseeinrichtungen 23 und 27 die Leistungsschalter 25 und 30 derart an, daß diese die vom Fehler betroffenen Phasenleiter 45 und 50 abschalten.

Das von dem ersten Distanzschutzgerät 15 erzeugte Fehlersignal F wird an einem Ausgang A15 des ersten Distanzschutzgerät 15 abgegeben und außerdem über die Datenleitung 40 zu dem zweiten Distanzschutzgerät 20 übermittelt; in gleicher Weise wird das von dem zweiten Distanzschutzgerät 20 erzeugte Fehlersignal F' an einem Ausgang A20 des zweiten Distanzschutzgerätes 20 abgegeben und außerdem über die Datenleitung 40 zu dem ersten Distanzschutzgerät 15 übermittelt. Damit liegt also im Kurzschlußfall in jedem der beiden Distanzschutzgeräte jeweils das erzeugte eigene Fehlersignal sowie jeweils das erzeugte Fehlersignal des jeweils anderen Distanzschutzgerätes vor; bei entsprechender Ausgestaltung der beiden Distanzschutzgeräte 15 und 20 - beispielsweise durch den Einsatz von die beiden Fehlersignale verknüpfenden logischen UND-Gliedern in jedem der beiden Distanzschutzgeräte - läßt sich erreichen, daß die beiden Distanzschutzgeräte ausschließlich dann ein Steuersignal S1 bzw. S2 an die beiden Auslöseeinrichtungen 23 und 27 abgeben, wenn von beiden Distanzschutzgeräten 15 und 20 jeweils Fehlersignale F und F' erzeugt wurden; ein fehlerhaftes Abschalten von Phasenleitern aufgrund einer Fehlfunktion eines der beiden Distanzschutzgeräte läßt sich so zuverlässig vermeiden.

Selbstverständlich ist es ebenfalls möglich, statt der Strom-und Spannungszeiger-Meßgrößen $\underline{Ua}$, $\underline{Ub}$, $\underline{Ia}$, $\underline{Ib}$ über die Datenleitung 40 die Strom- und Abtastwerte oder auch andere aus diesen Strom- und Abtastwerten abgeleitete Hilfsmeßgrößen zu übertragen; dabei muß natürlich sichergestellt sein, daß aus den Hilfsmeßgrößen die entsprechenden Strom- und Zeigermeßgrößen $\underline{Ua}$, $\underline{Ub}$, $\underline{Ia}$, $\underline{Ib}$ oder andere entsprechende zur Berechnung des Schleifenimpedanzmeßwertes geeignete Meßgrößen wiedergewonnen werden können.

Statt der Datenleitung 40 kann als Datenverbindung beispielsweise auch ein Funkverbindung eingesetzt werden.

## Patentansprüche

**1.** Verfahren zum Erzeugen eines zwischen einem ersten Phasenleiter (45) und einem zweiten Phasenleiter (50) einer Energieübertragungsanordnung aufgetretenen Kurzschluß kennzeichnenden Fehlersignals (F,F'), wobei der erste Phasenleiter (45) ein Phasenleiter einer ersten dreiphasigen Energieübertragungsleitung (5) und der zweite Phasenleiter ein Phasenleiter einer zweiten dreiphasigen, räumlich entlang der ersten Energieübertragungsleitung (5) angebrachten Energieübertragungsleitung (10) ist, bei dem

- eine dem durch den ersten Phasenleiter (45) fließenden Strom (Ia(t)) proportionale Strommeßgröße (MIa) abgetastet und unter Bildung von Stromabtastwerten digital gewandelt wird,
- eine der an dem ersten Phasenleiter (45) anliegenden Leiter-Erde-Spannung (Ua(t)) proportionale Spannungsmeßgröße (MUa) abgetastet und unter Bildung von Spannungs-abtastwerten digital gewandelt wird,

**dadurch gekennzeichnet, daß**

- eine dem durch den zweiten Phasenleiter (50) fließenden Strom (Ib(t)) proportionale Strommeßgröße (MIb) abgetastet und unter Bildung von Stromabtastwerten digital gewandelt wird,
- eine der an dem zweiten Phasenleiter (50) anliegenden Leiter-Erde-Spannung (Ub(t)) proportionale Spannungsmeßgröße (MUb) abgetastet und unter Bildung von Spannungs-abtastwerten digital gewandelt wird,
- für die durch die beiden Phasenleiter (45,50) gebildete Leiter-Leiter-Schleife mit den Strom- und Spannungsabtastwerten oder mit aus diesen abgeleiteten Hilfsmeßgrößen ($\underline{Ia}$,$\underline{Ua}$,$\underline{Ib}$,$\underline{Ub}$) der beiden Phasehleiter (45,50) ein komplexer Schleifenimpedanzmeßwert ($\underline{Z}1$,$\underline{Z}2$) gebildet wird und
- das Fehlersignal (F,F')gebildet wird, wenn der Schleifenimpedanzmeßwert ($\underline{Z}_1$,$\underline{Z}_2$) innerhalb eines vorgegebenen Auslösegebiets liegt.

**2.** Verfahren nach Anspruch 1, **dadurch gekennzeichnet, daß**

- die Strom- und Spannungsabtastwerte des ersten Phasenleiters (45) mit einem an die erste Energieübertragungsleitung (5) an einer ersten Stelle angeschlossenen Meßgerät (15) erfaßt werden,
- die Strom- und Spannungsabtastwerte oder die aus diesen abgeleiteten Hilfsmeßgrößen ($\underline{Ia}$, $\underline{Ua}$)des ersten Phasenleiters (45) über eine Datenverbindung (40) zu einem zweiten an die zweite Energieübertragungsleitung (10) an einer in der Nähe der ersten Stelle befindlichen zweiten Stelle angeschlossenen Meßgerät (20) übertragen werden, mit dem die Strom- und Spannungsabtastwerte des zweiten Phasenleiters (50) der zweiten Energieübertragungsleitung (10) erfaßt werden, und
- in dem zweiten Meßgerät (20) mit den Strom- und Spannungsabtastwerten oder mit den aus diesen abgeleiteten Hilfsmeßgrößen ($\underline{Ia}$,$\underline{Ua}$,$\underline{Ib}$, $\underline{Ub}$) der beiden Phasenleiter (45,50) die Schleifenimpedanz ($\underline{Z}_2$) ermittelt und das Fehlersignal (F') erzeugt wird.

**3.** Verfahren nach einem der vorangehenden Ansprüche,
**dadurch gekennzeichnet, daß**

- aus den Strom- und Spannungsabtastwerten als Hilfsmeßgrößen komplexe Strom- und Spannungszeigermeßgrößen ($\underline{Ia}$,$\underline{Ua}$,$\underline{Ib}$,$\underline{Ub}$) gebildet werden.

**4.** Verfahren nach einem der vorangehenden Ansprüche,
**dadurch gekennzeichnet, daß**

- als Meßgeräte (15,20) Distanzschutzmeßgeräte verwendet werden.

**5.** Anordnung zum Erzeugen eines zwischen einem ersten Phasenleiter (45) und einem zweiten Phasenleiter (50) einer Energieübertragungsanordnung aufgetretenen Kurzschluß kennzeichnenden Fehlersignals (F,F'), wobei der erste Phasenleiter (45) ein Phasenleiter einer ersten dreiphasigen Energieübertragungsleitung (5) und der zweite Phasenleiter ein Phasenleiter einer zweiten dreiphasigen , räumlich entlang der ersten Energieübertragungsleitung (5) angebrachten Energieübertragungsleitung (10) ist,

- mit einem ersten an die erste Energieübertragungsleitung (5) an einer ersten Stelle angeschlossenen Meßgerät (15),

  - das eine dem durch den ersten Phasenleiter (45) fließenden Strom (Ia(t)) proportionale Strommeßgröße (MIa)abtastet und unter Bildung von Stromabtastwerten digital wandelt und
  - das eine der an dem ersten Phasenleiter (45) anliegenden Leiter-Erde-Spannung (Ua(t)) proportionale Spannungsmeßgröße (MUa) abtastet und unter Bildung von Spannungsabtastwerten digital wandelt,

  **gekennzeichnet durch**

- eine das erste Meßgerät (15) mit einem zweiten, an die zweite Energieübertragungsleitung (10) an einer in der Nähe der ersten Stelle befindlichen zweiten Stelle angeschlossenen Meßgerät (20) verbindende Datenverbindung (40), über die die Strom- und Spannungsabtastwerte oder aus diesen abgeleitete Hilfsmeßgrößen ($\underline{Ia}$,$\underline{Ua}$) des ersten Meßgerätes (15) zu dem zweiten Meßgerät (20) übertragen werden,

  - wobei das zweite Meßgerät (20) derart ausgebildet ist, daß es eine dem **durch** den zweiten Phasenleiter (50) fließenden Strom (Ib(t)) proportionale Strommeßgröße (MIb) abtastet und unter Bildung von Stromabtastwerten digital wandelt,

- eine der an dem zweiten Phasenleiter (50) anliegenden Leiter-Erde-Spannung (Ub(t)) proportionale Spannungsmeßgröße (MUb) abtastet und unter Bildung von Spannungsabtastwerten digital wandelt und

- für die **durch** die beiden Phasenleiter (45,50) gebildete Leiter-Leiter-Schleife mit den Strom- und Spannungsabtastwerten oder mit den aus diesen abgeleiteten Hilfsmeßgrößen ($\underline{Ia}$,$\underline{Ua}$) des ersten Meßgerätes (15) sowie mit den eigenen Strom- und Spannungsabtastwerten oder mit aus diesen abgeleiteten Hilfsmeßgrößen ($\underline{Ib}$,$\underline{Ub}$) einen komplexen Schleifenimpedanzmeßwert ($\underline{Z}_2$) bildet und

- das Fehlersignal (F') erzeugt, wenn der Schleifenimpedanzmeßwert ($\underline{Z}_2$) innerhalb eines vorgegebenen Auslösegebiets liegt.

## Claims

**1.** Method for producing a fault signal (F, F') which indicates a short-circuit occurring between a first phase conductor (45) and a second phase conductor (50) of a power transmission arrangement, with the first conductor (45) being a phase conductor of a first three-phase power transmission line (5), and the second phase conductor being a phase conductor of a second three-phase power transmission line (10) which is fit physically along the first power transmission line (5), in which method

- a current measurement variable (MIa) which is proportional to the current (Ia(t)) flowing through the first phase conductor (45) is sampled and is digitally converted to form current samples,

- a voltage measurement variable (MUa), which is proportional to the conductor-earth voltage (Ua(t)) on the first phase conductor (45) is sampled and is digitally converted to form voltage samples,

**characterized in that**

- a current measurement variable (MIb) which is proportional to the current (Ib(t)) flowing through the second conductor (50) is sampled and is digitally converted to form current samples,

- a voltage measurement variable (MUb) which is proportional to the conductor-earth voltage ($Ub(t)$) on the second phase conductor (50) is sampled and is digitally converted to form voltage samples,

- a complex loop impedance measured value ($\underline{Z}1$, $\underline{Z}2$) is formed for the conductor-conductor loop formed by the two phase conductors (45, 50), using the current and voltage samples or using auxiliary measurement variables ($\underline{I}a$, $\underline{U}a$, $\underline{I}b$, $\underline{U}b$) derived from them, for the two phase conductors (45, 50), and
- the fault signal (F, F') is formed if the loop impedance measured value ($\underline{Z}_1$, $\underline{Z}_2$) is within a predetermined response range.

2. Method according to Claim 1, **characterized in that**

- the current and voltage samples of the first phase conductor (45) are detected using a measurement device (15) connected to the first power transmission line (5) at a first point,
- the current and voltage samples or the auxiliary measurement variables ($\underline{I}a$, $\underline{U}a$) derived from them for the first phase conductor (45) are transmitted via a data link (40) to a second measurement device (20) connected at a second point located in the vicinity of the first point, and by means of which the current and voltage samples of the second phase conductor (50) of the second power transmission line (10) are detected, and
- the loop impedance ($\underline{Z}_2$) is determined and the fault signal (F') is produced in the second measurement device (20) using the current and voltage samples or using the auxiliary measurement variables ($\underline{I}a$, $\underline{U}a$, $\underline{I}b$, $\underline{U}b$) derived from them, for the two phase conductors (45, 50).

3. Method according to one of the preceding claims, **characterized in that**

- complex current and voltage vector measurement variables ($\underline{I}a$, $\underline{U}a$, $\underline{I}b$, $\underline{U}b$) are formed as auxiliary measurement variables from the current and voltage samples.

4. Method according to one of the preceding claims, **characterized in that**

- distance protection measurement devices are used as the measurement devices (15, 20).

5. Arrangement for producing a fault signal (F, F') which indicates a short-circuit occurring between a first phase conductor (45) and a second phase conductor (50) of a power transmission arrangement, with the first conductor (45) being a phase conductor of a first three-phase power transmission line (5), and the second phase conductor being a phase conductor of a second three-phase power transmission line (10) which is fit physically along the first power transmission line (5),

- having a first measurement device (15) connected to the first power transmission (5) at a first point,

  - which samples a current measurement variable (MIa) which is proportional to the current ($Ia(t)$) flowing through the first phase conductor (45) and digitally converts it to form current samples, and
  - which samples a voltage measurement variable (MUa), which is proportional to the conductor-earth voltage ($Ua(t)$) on the first phase conductor (45), and digitally converts it to form voltage samples,

**characterized by**

- a data link (40) which connects the first measurement device (15) to a second measurement device (20), connected to the second power transmission line (10) at a second point located in the vicinity of the first point, via which data link (40) the current and voltage samples or auxiliary measurement variables ($\underline{I}a$, $\underline{U}a$), derived from them, for the first measurement device (15) are transmitted to the second measurement device (20),

  - with the second measurement device (20) being designed such that it samples a current measurement variable (MIb) which is proportional to the current ($Ib(t)$) flowing through the second phase conductor (50) and digitally converts it to form current samples,
  - samples a voltage measurement variable (MUb) which is proportional to the conductor-earth voltage ($Ub(t)$) on the second phase conductor (50) and digitally converts it to form voltage samples,
  - forms a complex loop impedance value ($\underline{Z}_2$) for the conductor-conductor loop formed by the two phase conductors (45, 50), using the current and voltage samples or using the auxiliary measurement variables ($\underline{I}a$, $\underline{U}a$) derived from them, for the first measurement device (15), and using its own current and voltage samples or using auxiliary measurement variables ($\underline{I}b$, $\underline{U}b$), derived from them, and
  - produces the fault signal (F') if the loop impedance measured value ($\underline{Z}_2$) is within a

predetermined response range.

**Revendications**

1. Procédé pour produire un signal de défaut (F, F') caractérisant un court-circuit apparaissant entre un premier conducteur de phase (45) et un deuxième conducteur de phase (50) d'un dispositif de transmission d'énergie, le premier conducteur de phase (45) étant un conducteur de phase d'une première ligne de transmission d'énergie triphasée (5) et le deuxième conducteur de phase étant un conducteur de phase d'une deuxième ligne de transmission d'énergie triphasée (10) disposée dans l'espace le long de la première ligne de transmission d'énergie (5),

   - dans lequel on échantillonne une grandeur mesurée de courant (MIa) proportionnelle au courant (Ia(t)) passant dans le premier conducteur de phase (45) et on la numérise en formant des valeurs échantillonnées de courant
   - et dans lequel on échantillonne une grandeur mesurée de tension (MUa) proportionnelle à la tension conducteur-terre (Ua(t)) existant sur le premier conducteur de phase (45) et on la numérise en formant des valeurs échantillonnées de tension,

   **caractérisé par le fait que**

   - on échantillonne une grandeur mesurée de courant (MIb) proportionnelle au courant (Ib(t)) passant dans le deuxième conducteur de phase (50) et on la numérise en formant des valeurs échantillonnées de courant,
   - on échantillonne une grandeur mesurée de tension (MUb) proportionnelle à la tension conducteur-terre (Ub(t)) existant sur le deuxième conducteur de phase (50) et on la numérise en formant des valeurs échantillonnées de tension,
   - on forme une valeur mesurée d'impédance de boucle complexe ($\underline{Z1}$, $\underline{Z2}$) pour la boucle conducteur-conducteur formée par les deux conducteurs de phases (45, 50) avec les valeurs échantillonnées de courant et de tension ou avec des grandeurs mesurées auxiliaires ($\underline{Ia}$, $\underline{Ua}$, $\underline{Ib}$, $\underline{Ub}$), déduites de celles-ci, des deux conducteurs de phases (45, 50), et
   - on forme le signal de défaut (F, F') lorsque la valeur mesurée d'impédance de boucle ($\underline{Z1}$, $\underline{Z2}$) se trouve à l'intérieur d'un domaine de déclenchement prédéterminé.

2. Procédé selon la revendication 1,
   **caractérisé par le fait que**

   - on détecte les valeurs échantillonnées de courant et de tension du premier conducteur de phase (45) avec un appareil de mesure (15) raccordé à la première ligne de transmission d'énergie (5) à un premier endroit,
   - on transmet les valeurs échantillonnées de courant et de tension ou les grandeurs mesurées auxiliaires ($\underline{Ia}$, $\underline{Ua}$), déduites de celles-ci, du premier conducteur de phase (45) par l'intermédiaire d'une liaison de données (40) à un deuxième appareil de mesure (20) qui est raccordé à la deuxième ligne de transmission d'énergie (10) à un deuxième endroit situé à proximité du premier endroit et avec lequel les valeurs échantillonnées de courant et de tension du deuxième conducteur de phase (50) de la deuxième ligne de transmission d'énergie (10) sont détectées, et
   - dans le deuxième appareil de mesure (20), on détermine l'impédance de boucle ($\underline{Z2}$) avec les valeurs échantillonnées de courant et de tension ou avec les grandeurs mesurées auxiliaires ($\underline{Ia}$, $\underline{Ua}$, $\underline{Ib}$, $\underline{Ub}$). déduites de celles-ci, des deux conducteurs de phases (45, 50) et on produit le signal de défaut (F').

3. Procédé selon l'une des revendications précédentes,
   **caractérisé par le fait que**

   - on forme comme grandeurs mesurées auxiliaires, à partir des valeurs échantillonnées de courant et de tension, des grandeurs mesurées de vecteur de courant et de tension complexes ($\underline{Ia}$, $\underline{Ua}$, $\underline{Ib}$, $\underline{Ub}$).

4. Procédé selon l'une des revendications précédentes,
   **caractérisé par le fait que**

   - on utilise comme appareils de mesure (15, 20) des appareils de mesure de protection à distance.

5. Dispositif pour produire un signal de défaut (F, F') caractérisant un court-circuit apparaissant entre un premier conducteur de phase (45) et un deuxième conducteur de phase (50) d'un dispositif de transmission d'énergie, le premier conducteur de phase (45) étant un conducteur de phase d'une première ligne de transmission d'énergie triphasée (5) et le deuxième conducteur de phase étant un conducteur de phase d'une deuxième ligne de transmission d'énergie triphasée (10) disposée dans l'espace le long de la première ligne de transmission d'énergie (5),

   - avec un premier appareil de mesure (15) qui est raccordé à la première ligne de transmission d'énergie (5) à un premier endroit,

- qui échantillonne une grandeur mesurée de courant (MIa) proportionnelle au courant (Ia(t)) passant dans le premier conducteur de phase (45) et qui la numérise en formant des valeurs échantillonnées de courant, et
- qui échantillonne une grandeur mesurée de tension (MUa) proportionnelle à la tension conducteur-terre (Ua(t)) existant sur le premier conducteur de phase (45) et qui la numérise en formant des valeurs échantillonnées de tension,

**caractérisé par**

- une liaison de données (40) qui relie le premier appareil de mesure (15) à un deuxième appareil de mesure (20) raccordé à la deuxième ligne de transmission d'énergie (10) à un deuxième endroit situé à proximité du premier endroit et par l'intermédiaire de laquelle les valeurs échantillonnées de courant et de tension ou des grandeurs mesurées auxiliaires (Ia, Ua), déduites de celles-ci, du premier appareil de mesure (15) sont transmises au deuxième appareil de mesure (20),

  - le deuxième appareil de mesure (20) étant conçu de telle sorte qu'il échantillonne une grandeur mesurée de courant (MIb) proportionnelle au courant (Ib(t)) passant dans le deuxième conducteur de phase (50) et la numérise en formant des valeurs échantillonnées de courant,
  - qu'il échantillonne une grandeur mesurée de tension (MUb) proportionnelle à la tension conducteur-terre (Ub(t)) existant sur le deuxième conducteur de phase (50) et la numérise en forme des valeurs échantillonnées de tension,
  - qu'il forme une valeur mesurée d'impédance de boucle complexe (Z2) pour la boucle conducteur-conducteur formée par les deux conducteurs de phases (45, 50) avec les valeurs échantillonnées de courant et de tension ou avec des grandeurs mesurées auxiliaires (Ia, Ua), déduites de celles-ci, du premier appareil de mesure (15) ainsi qu'avec ses propres valeurs échantillonnées de courant et de tension ou avec des grandeurs mesurées auxiliaires (Ib, Ub) déduites de celles-ci, et
  - qu'il produit un signal de défaut (F') lorsque la valeur mesurée d'impédance de boucle (Z2) se trouve à l'intérieur d'un domaine de

déclenchement prédéterminé.

EP 1 131 876 B1

S1

Ia, Ua, F

D15

S1

S15

15

A15

F

Mua

S2

S1 E23A

E23B

23

MIa

Ua(t)

25

A23

60

55

45

Ia(t)

5

30

A27

70

65

Ib(t)

50

Ib, Ub, F'

27

MIb

Ub(t)

10

E27B

E27A

Mub

F'

A20

35

S2

S20

40

D20

20

S2